Europäisches Patentamt

**European Patent Office**

**Office européen des brevets**

(11) Publication number: **0 156 620**
**A2**

# (12) EUROPEAN PATENT APPLICATION

(21) Application number: **85301916.4**

(22) Date of filing: **19.03.85**

(51) Int. Cl.⁴: **E 04 B 2/72**
**E 04 B 2/28, E 04 B 2/32**

(30) Priority: **21.03.84 GB 8407351**

(43) Date of publication of application:
**02.10.85 Bulletin 85/40**

(84) Designated Contracting States:
**AT BE CH DE FR GB IT LI LU NL SE**

(71) Applicant: **Spacetrekker Products Limited**
**55 North Street**
**Thame Oxfordshire, OX9 3BH(GB)**

(72) Inventor: **Burr, Brian**
**20 Deacon Way**
**Banbury Oxfordshire(GB)**

(74) Representative: **Higgins, Michael Roger et al,**
**Marks & Clerk 57/60 Lincoln's Inn Fields**
**London WC2A 3LS(GB)**

(54) A panel.

(57) The panel (10) has a channel portion (12) along one edge which is interlockable with a portion along an opposite edge of a like panel to close the channel portion and join the two panels together in edge-to-edge relationship. The panel has a first hinge member (16) along the free edge of the channel portion (12) and a second complementary hinge portion (17) adjacent to but spaced from the opposite edge of the panel for co-operating with a first hinge portion (16) of a like channel. The panel also has first and second formations (18 and 19) on or adjacent the channel portion and at the opposite edge of the panel, respectively. These formations (18 and 19) are snap fittably engageable with second and first formations (19 and 18) respectively of like panels when the panels are pivoted relative to one another with complementary hinge members (16 and 17) co-operating, to interlock the panels together. If a double skinned structure is required projections on secondary panels (24) can be snap-fitted into grooves or sockets (22) in adjacent pairs of channel portions (12).

FIG. 2.

M&C FOLIO: 799P47671                    WANGDOC: 0202h

"A PANEL"


This invention relates to a panel which can be interlocked with one or more like panels to make up a ceiling, side wall, roof or floor and is particularly but not exclusively applicable to the construction of bodies for goods vehicles in conjunction with devices as described in British Patent Specification 2052004B.

According to the invention, there is provided a panel having a channel portion along one edge which is interlockable with a portion along an opposite edge of a like panel to close the channel portion and join the two panels together in edge-to-edge relationship, a first hinge member along the free edge of the channel portion, a second complementary hinge member adjacent to but spaced from the opposite edge of the panel for co-operating with a first hinge portion of a like panel, and first and second complementary formations on or adjacent to the channel portion and at the opposite edge of the panel respectively for snap fit engagement with second and first formations respectively of like panels when the panels are pivoted relative to one another with complementary hinge members co-operating.

Preferred and/or optional features of the invention

are set forth in claims 2-10.

One embodiment of the invention will now be more particularly described with reference to the accompanying drawings; wherein:

Figure 1 is a schematic view showing a plurality of panels joined together.

Figure 2 is a fragmentary view on an enlarged scale showing the joint between two adjacent panels, and

Figure 3 is an exploded view of a device which can be used to join together groups of interlocked panels.

Referring to the drawings, the panels 10 shown therein each have a planar portion 11 with an integral, elongate channel portion 12 along the entire length of one edge.

The channel portion 12 has two sides 13 and 14 of equal dimensions and a base 15 which define in cross-section the two non-parallel sides and the shorter of the parallel sides of a trapezium.

A first hinge member 16 in the form of an inwardly directed part cylindrical protrusion, is provided along the entire length of the free edge of the channel portion 12, i.e. the edge of the side 13 remote from the base 15. An arcuate projection 9 extending over the entire length of the panel is provided adjacent to the protrusion 16 for a purpose which will be described later.

A second hinge member 17, in the form of an arcuate ridge defining a part cylindrical socket or groove, is provided along the entire length of each panel adjacent to but spaced from that edge of the panel remote from the channel portion.

First and second complementary formations 18 and 19 are provided on each panel at or adjacent to the junction between the planar portion 11 and the channel portion 12, and at the edge of the panel remote from the channel portion, respectively. The formations 18 and 19 each extend along the entire length of the panel. The formation 19 is of bifurcated shape and defines a two sided elongate groove, and the formation 18 is in the form of a two-sided projection which is snap fittably engageable into the groove of the formation 19 on a like panel. One side 20 of the formation 18 and a portion 21 of the formation 19 are inclined at equal or substantially equal angles to the general plane of the panel to facilitate snap-fit engagement.

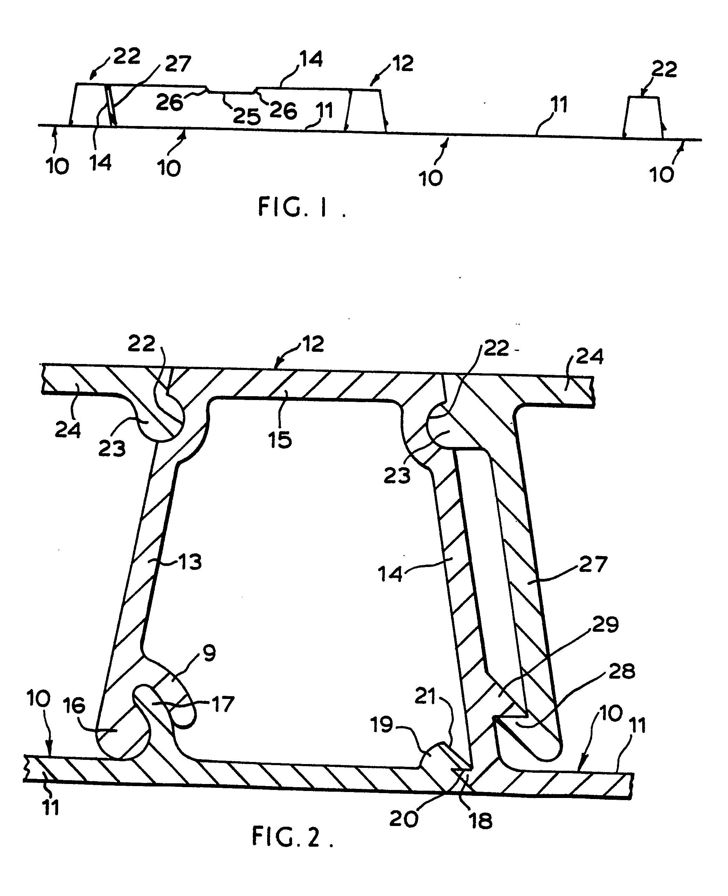

To assemble two panels together in edge-to-edge relationship a first panel (shown unshaded in Figure 2) is for example held stationary and the hinge member 16 of a second panel (shaded in Figure 2) is located in the hinge member 17 of the first panel with the first and second panels extending at an angle to one another. The second panel is then pivoted relative to the first panel (during which movement the ridge 17 will extend into the channel defined between the protrustion 16 and the arcuate projection 9)until the formation 18 on the second panel snap-fittably engages within the groove of the bifurcated formation 19 on the first panel. The planar portions 11 of the two panels are then co-planar and flush at the joint lines. Moreover, because the formations 18 and 19 extend over the entire length of the panels the joint is resistant to the passage of liquid. The arcuate projections 9 serve to counter any force caused such as by impact or pushing which tries to unlock the joints between the panels.

Secondary panels 24 may also be provided. In this case each channel portion 12 may also have on each of its sides 13 and 14 adjacent to its base 15 an elongate part cylindrical groove or socket 22 for receiving complementary elongate projections 23 on the secondary panels 24. Optionally, the secondary panels 24 may also, as shown, have at one end a flange 27. This flange extends at an acute angle to the panel (i.e. at an angle which is complementary to the angle between the base 15 and side 14 of the primary panel) and is provided with a hook formation 28 which engages under a corresponding hook formation 29 on one side 14 of the channel portion 12 of a primary panel 10.

5

Advantageously, each panel 24 has therein and extending over its entire length a recess 25 (see Figure 1), with divergent sides 26, to give the panels 24 flexibility to overcome tolerance problems. If a double skinned structure is required a secondary panel can be snap-fitted between a pair of adjacent channel portions 12 to be co-planar with the bases 15 of the channel portions 12 and flush with the channel portions 12 at the joint lines. Moreover, if desired an insulating medium could be interposed between the panels 10 and secondary panels 24.

The panels 10 and 24 will normally be formed by extrusion and from aluminium or possibly from plastics material.

Typically, each panel 10 may be a 100mm wide, 1.3mm thick and 2.5 metres long. In this case each channel portion 12 may be 15mm deep, 15mm wide at its wider end, and 10mm wide at its base.

As described above, the hinge members 16 and 17, formations 18 and 19 sockets 22 and formations 29 extend over the entire length of the panel. However, it will be appreciated that this may not be essential. Moreover, other modifications may be made to the panel without departing from the scope of the invention defined by the appended claims.

The above described panels can be used in conjunction with devices as described in British Patent Specification 2052004B, whereby groups of interlocked panels can be joined together to make up *inter alia* bodies for goods vehicles.

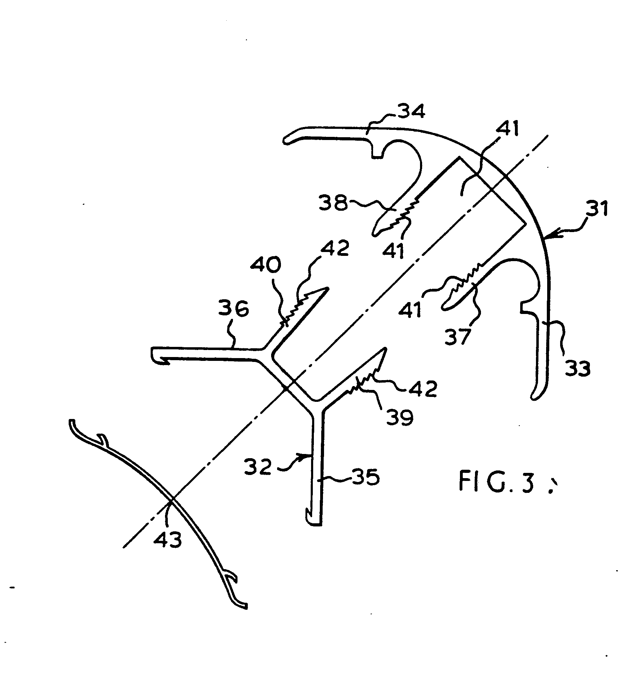

A device as disclosed in British Patent Specification 2052004B is shown in Figure 3 and comprises first and second sections 31 and 32, respectively which, when connected together, provide recesses for receiving the edges of groups of interlocked panels. The section 31 is elongate and a plurality of much shorter sections 32 are adapted to be connected to the section 31 in spaced relationship along the longitudinal extent of section 31. However, the sections 32 could be of the same length as the corresponding sections 31. Each section 31, 32 has two wall portions 33 and 34, 35 and 36 adapted to lie substantially parallel to the groups of interlocked panels to be joined and a connection member between the wall portions. Each connection member includes two spaced limbs 37 and 38, 39 and 40, the two limbs 39 and 40 of the section 32 being adapted to be inserted into a recess 41 formed between the two limbs 37 and 38 of the other section 31. Each limb of the section 32 is provided with a series of serrations 42 engageable with a series of serrations 41 provided on a respective one of the limbs of the section 31. The limbs 37 and 38 of the section 31 are substantially rigid _per se_ and the limbs 39 and 40 of the section 32 diverge before insertion and are resilient, so that upon insertion they are pressed together and cause their associated wall portions to be pushed into clamping contact with surfaces of the panels. An elongate strip 43 may be snap fitted onto the sections 32. Moreover, three such devices can be connected together to extend in mutually perpendicular directions by corner joints as disclosed in British Patent Application No. 2092699A.

In order to construct a vehicle body a cuboidal framework structure can be assembled from sections 31 and the corner joints referred to above. Panels 10 are then interlocked together consecutively from within the vehicle body, while previously interlocked panels are firmly held against the wall portions 33, 34 of the section 31 by sections 32. The design of the panels and in particular the arrangement of the pivot axis enables panels to be interlocked in this way with the channel portions 12 on the inside of the vehicle.

When constructing vehicle bodies in this way, it is advantageous to employ secondary panels 24 in order to ensure a constant thickness of the panel assembly where the latter is held between the sections 31 and 32. Alternatively strips of similar cross-section to the panels 24 could be employed at the ends of the panels 10 between adjacent pairs of channel portions 12. Moreover, a channel member of similar cross-section to the channel portions 12 should be connected along the one edge of the panel assembly, or, alternatively, packing could be employed.

If, owing to their length, some or all of the panel assemblies have too much flexibility suitable reinforcing members can be included.

0156620

CLAIMS:

1. A panel having a channel portion (12) along one edge which is interlockable with a portion along an opposite edge of a like panel to close the channel portion (12) and join the two panels (10) together in edge-to-edge relationship, a first hinge member (16) along the free edge of the channel portion (12), a second complementary hinge member (17) adjacent to but spaced from the opposite edge of the panel for co-operating with a first hinge portion (16) of a like panel, and first (18) and second (19) complementary formations on or adjacent to the channel portion (12) and at the opposite edge of the panel (10) respectively for snap fit engagement with second and first formations respectively of like panels when the panels are pivoted relative to one another with complementary hinge members (16,17) co-operating.

2. The panel of claim 1, wherein the channel portion (12) has sides (13,14) which diverge towards its open end.

3. The panel of claim 2, wherein the sides (13,14) and a base (15) of the channel portion (12) define the two non-parallel and the shorter of the parallel sides of a trapezium, respectively.

4. The panel of anyone of Claims 1-3, wherein the channel portion (12) has means (22) remote from its open side capable of snap fit engagement, when two or more like panels are joined together, with one or two secondary panels (24) or strips to form a double skinned structure in the region of the secondary panels or strips.

5. The panel of claim 4, wherein said means comprises sockets (22) at least one on either side of the channel portion (12) for receiving complementary projections (23) on the secondary panels or strips.

6. The panel of Claim 4 or Claim 5, wherein each secondary panel (24) or strip has a flange (27) at one end provided with a hook formation (28) for engagement with a hook formation (29) on the channel portion (12) of a primary panel (10).

7. The panel of any one of the preceding claims, wherein the second hinge member (17) is in the form of a socket arranged to receive the first hinge member (16) of a like panel.

8. The panel of any one of the preceding claims, wherein the second formation (19) is of bifurcated shape which defines a groove arranged to receive therein a first formation (18) of a like panel.

9.   The panel of any one of the preceding claims and formed by extrusion.

10. A structural assembly comprising two or more groups of interlocked panels (10) and one or more devices joining the groups of panels (10) edge-to-edge, the panels (10) being as claimed in anyone of the preceding claims and the device or devices each comprising first and second sections (32 and 31, respectively) which, when connected together, provide recesses for receiving the edges of the interlocked panels, each section having at least two wall portions (35,36 and 33,34) adapted to lie substantially parallel to the panels to be joined and a connection member between the wall portions, each connection member comprising two spaced limbs (39,40 and 37,38), the two limbs (39,40) of said first section (32) being adapted to be inserted into a recess formed between the two limbs (37,38) of the second section (31) and each limb of said first section being provided with a series of serrations (42) engageable with a series of serrations (41) provided on a respective one of said limbs of the second section, wherein the limbs (37,38) of said second section (31) are substantially rigid per se and the limbs (39,40) of said first section (32) diverge before insertion and are resilient, so that upon insertion they are pressed together and cause their associated wall portions (35,36) to be pushed into clamping contact with surfaces of the interlocked panels.

11. A structural assembly comprising a plurality of interlocked primary panels (10) and a plurality of secondary panels (24) or strips, each primary panel (10) having along one edge a channel portion (12) which is interlocked or interlockable with a portion along an opposite edge of a like panel to close the open side of the channel portion (12) and join the primary panels in edge-to-edge relationship, and each channel portion (12) having means (22) which in co-operation with corresponding means (22) on a channel portion (12) of an adjoining panel snap fittably receives or is capable of snap-fittably receiving a secondary panel (24) or strip to form a double skinned structure in the region of the secondary panel or strip.

1/2

0156620

FIG. I.

FIG. 2.

FIG. 3